# FASCICULE DE BREVET EUROPEEN

(11) **EP 0 618 548 B1**
(45) Date de publication et mention de la délivrance du brevet: **04.11.1998**
(21) Numéro de dépôt: 94200273.4
(22) Date de dépôt: 02.02.1994
(51) Int. Cl.: G06K 19/077

(54) **Procédé et dispositif de fabrication de cartes à mémoire**
Verfahren und Vorrichtung zum Herstellen einer Speicherkarte
Method and device for manufacturing a memory card

(30) Priorité: 23.02.1993 FR 9302059
(43) Date de publication de la demande: 05.10.1994
(73) Titulaire: SCHLUMBERGER INDUSTRIES, F-92120 Montrouge (FR)
(72) Inventeur: Rose, René, F-78190 Voisin-le-Bretonneux (FR)

(56) Documents cités:
- EP-A- 0 071 255
- EP-A- 0 267 826
- EP-A- 0 340 099
- EP-A- 0 488 485
- WO-A-89/12871
- FR-A- 2 622 323

## Description

La présente invention concerne un procédé et un dispositif pour sa mise en oeuvre, destinés à réaliser des cartes à mémoire, ainsi que les cartes obtenues par ce procédé et ce dispositif. Les cartes à mémoire sont réalisées par moulage à partir d'un matériau thermoplastique. Usuellement, les cartes à mémoire comportent deux éléments, à savoir un corps de carte dont le graphisme est imprimé et un module électronique constitué lui-même d'une plage de contact et d'une pastille enfermant un circuit intégré. Dans ces procédés usuels, le corps de carte est usiné de manière à recevoir ledit module électronique.

De telles cartes à mémoire sont appelées à contenir des informations destinées à des services, tels que le prépaiement d'unités de communication téléphonique par exemple.

La norme ISO n° 7 810 soumet ces cartes électroniques à des contraintes et des spécifications draconiennes, tant sur le plan des dimensions, qu'au point de vue de la résistance mécanique et fiabilité.

Un des éléments les plus importants est la tenue mécanique de la carte, à savoir la résistance de cette dernière aux contraintes auxquelles elle peut être soumise, et tendant à l'endommager, jusqu'à l'enlèvement de la pastille de circuit intégré par exemple.

La réalisation de telles cartes en est rendue d'autant plus difficile que les cartes présentent des dimensions réduites, notamment en épaisseur (0,8 mm).

L'un des principaux problèmes soulevés lors de la fabrication de ces cartes à mémoire est la solidarisation et le maintien du module avec le corps de carte.

De façon connue, les cartes sont réalisées par moulage, comme par exemple décrit dans le brevet français n° 2 650 530, au nom de la demanderesse, et dans lequel on utilise un moule pourvu d'une empreinte définissant la forme extérieure du corps de carte et limité par deux parois principales correspondant aux deux faces principales de la carte. Dans ce cas de réalistion, les cartes à mémoire comportent trois éléments, à savoir un corps de carte, un élément support comprenant sur une de ses faces au moins un graphisme, et enfin un module électronique. On dispose dans ledit moule un élément-support comprenant au moins sur une de ses faces un graphisme et on maintient ce dernier contre une première paroi de l'empreinte, et on injecte dans le moule un matériau thermoplastique de manière que ce dernier remplisse la totalité du volume délimité par l'empreinte, non occupé par l'élément-support. Ensuite, on démoule la pièce afin d'obtenir un corps de carte duquel est solidaire un élémentsupport comprenant un graphisme.

Afin de permettre la mise en place du module électronique, lors du moulage du corps de carte, il a été réservé un évidement, sur la face principale du corps de carte opposée à celle pourvue de l'élément-support. L'évidement est de forme complémentaire au module électronique.

De façon connue, le module électronique est mis en place et rendu solidaire du corps de carte, comme décrit par exemple, dans la demande de brevet européen n° 197 847. Dans ce document, il est décrit un procédé selon lequel on prévoit, sur l'évidement apte à recevoir le module électronique, des aspérités qui sont portées à leur température de ramollissement, et on applique avec pression le module électronique en écrasant l'extrémité desdites aspérités jusqu'à ce que ledit module soit parvenu à sa position adéquate, c'est-à-dire jusqu'à ce que les plages de contact soient sensiblement dans le plan de la face principale correspondante du corps de carte. On complète la solidarisation du module avec le corps de carte, à l'aide d'une injection de colle isolante entre le fond dudit évidement et le module électronique.

On connaît également un autre procédé de mise en place et fixation d'un module électronique sur une carte à mémoire, tel que décrit dans la demande de brevet européen n° 128 822. Selon ce procédé connu, on dispose le module électronique sur un outil, comportant une extrémité plane et associée à des moyens de chauffage. En combinant les effets de pression et de chauffage localisés, le module est enfoncé jusqu'à la position adéquate dudit module. Le fluage du matériau plastique constituant le corps de la carte, sous l'effet de l'enfoncement du module électronique, entraîne le remplissage de lumière traversante prévue sur le module, et comportant une extrémité évasée, permettant ainsi à la matière remplissant lesdits orifices de jouer le rôle de rivets.

On connaît également par la demande de brevet européen n° 449 691, déposée au nom de la demanderesse, un procédé de fixation d'un module électronique sur le corps d'une carte, selon lequel on plonge dans un récipient contenant un matériau adhésif, un outil de tamponnage comportant plusieurs pointes à l'extrémité desquelles se forment des gouttes de matériaux adhésifs, lesdites gouttes étant transférées sur le corps de la carte en appliquant l'outil sur celui-ci. Plus précisément, la cavité apte à recevoir le module électronique est étagée en ce sens qu'elle comprend un logement inférieur qui a des dimensions réduites et un logement supérieur qui a les plus grandes dimensions et qui débouche dans la face supérieure du corps de carte. La partie restante du fond du logement supérieur forme donc un épaulement parallèle à la face supérieure du corps de carte. Les gouttes de produit adhésif sont déposées sur cet épaulement. Lorsque l'outil pourvu de pointes est appliqué sur l'épaulement, du fait de la différence de tension superficielle entre le matériau formant les tiges et le matériau formant le corps de carte, les gouttes formées aux extrémités des tiges restent sur la surface d'épaulement 20. L'étape ultérieure consiste à mettre en place dans la cavité le module électronique et à provoquer la polymérisation du matériau adhésif. De préférence, selon ce procédé bien connu, les matériaux adhésifs sont du type cyano-acrylates.

On connaît par ailleurs du document EP-A-0 488 485 un dispositif de fabrication de cartes par moulage comprenant des moyens pour mettre en place le module électronique à l'intérieur de l'empreinte du moule avant l'injection du matériau plastique constitutif du corps de carte ainsi que, du document EP-A1-0 340 099, un procédé de réalisation de cartes par moulage comportant des éléments graphiques dans lequel lesdits éléments graphiques sont portés par un élément support disposé dans le moule avant injection.

Ces procédés connus donnent satisfaction pour ce qui est de la fixation de l'élément-support de graphisme sur le corps de carte.

Cependant, ils sont susceptibles de perfectionnement, en ce qui concerne la mise en place et la solidarisation du module électronique sur le corps de carte.

En effet, les opérations de mise en place, d'une part de l'élément-support sur le corps de carte, et d'autre part du module électronique sur le corps de carte, sont des opérations distinctes et successives. Par ailleurs, la mise en place du module par ramollissement partiel du corps de carte est relativement délicate. De plus, les colles ou résines, du type époxy par exemple, utilisées pour fixer le module électronique sur le corps de carte, subissent un phénomène de retrait, certes limité mais qui pourrait mettre en péril les positions relatives du module et du corps de carte. Lorsque le module électronique est monté selon les techniques connues, il est toujours possible de retirer ce dernier du corps de carte et de le fixer sur un autre corps. Le procédé de la présente invention ne permet pas cet enlèvement sans destruction du module.

Dans ce contexte, l'invention vise à proposer un procédé et un dispositif pour la fabrication de cartes à mémoire, susceptibles d'améliorer les performances des procédés connus, notamment sur le plan de la simplicité, du coût, et de la fiabilité de la liaison entre le module électronique et le corps de carte, pour des raisons de sécurité.

A cette fin, selon l'invention, le procédé pour la fabrication d'une carte à mémoire électronique, comprenant a) un corps de carte réalisé en un matériau thermoplastique et présentant deux faces principales, sensiblement parallèles entre elles ; b) un élément-support comprenant un graphisme sur une de ses faces au moins ; c) un module électronique comprenant une plage de contacts sur une des faces de laquelle est fixée une pastille (incluant un circuit intégré), le procédé comportant les étapes suivantes ;
- Dans un moule pourvu d'une empreinte définissant la forme de la carte et limité par deux parois principales correspondant auxdites faces principales du corps de carte, on dispose et on maintient ledit élément-support contre une première paroi principale du moule.
- On injecte dans le volume défini par l'empreinte un matériau thermoplastique appelé à remplir ledit volume, non occupé par ledit élément-support ;
est caractérisé en ce qu'il comporte en outre une étape selon laquelle:
- De manière à faire pénétrer le module électronique dans le matériau avant que ledit matériau injecté ne soit complètement solidifié, on met en place ledit module électronique en le déplaçant, à l'intérieur d'une cavité débouchant sur une seconde paroi du moule de manière à communiquer avec ladite empreinte, entre une première position où ledit module est rétracté et ne dépasse pas de ladite seconde paroi du moule, jusqu'à une seconde position, à l'intérieur de l'empreinte, où ledit module est en position adéquate, dans laquelle la plage de contacts affleure au niveau de la seconde paroi principale du moule.

De préférence, on prévoit que la mise en place du module électronique est effectuée sous pression.

Avantageusement, la matériau constituant le corps de carte et le matériau constituant le module électronique sont tels qu'à l'état liquide, ils permettent, sous l'effet de la chaleur et de la pression, la création de liaisons chimiques intermoléculaires.

A titre d'exemple, le corps de carte étant en ABS, le matériau constituant le module peut être par exemple en PA (polyamide), ou en PBT (polytérephtalate de butylène). En variante, le corps de carte étant réalisé en PC (polycarbonate), le matériau constituant le module électronique peut être en PC, PA, ou PBT.

Selon un mode préféré de mise en oeuvre, la mise en place du module électronique est effectuée dans un laps de temps, suivant l'injection du matériau thermoplastique dans l'empreinte, inférieur à une seconde, et de préférence compris entre 1/10e et 5/10e de seconde.

L'invention concerne également un dispositif pour la fabrication d'une carte à mémoire électronique comprenant un corps de carte réalisé en un matériau thermoplastique et présentant deux faces principales sensiblement parallèles entre elles ; un élément-support comprenant un graphisme sur une de ses faces au moins ; un module électronique comprenant une plage de support sur une des faces de laquelle est fixée une pastille comportant un circuit intégré, ledit dispositif comportant :
- un moule pourvu d'une empreinte définissant la forme de la carte et limité par deux parois principales correspondant aux faces principales de la carte ;
- des moyens pour disposer et maintenir ledit élément-support contre une première paroi principale du moule ;
- des moyens pour injecter dans le volume défini par l'empreinte un matériau thermoplastique, à l'état liquide ou visqueux, et appelé à remplir ledit volume non occupé par ledit élément support ;
et, caractérisé en ce qu'il comporte en outre :
- des moyens pour mettre en place et maintenir ledit module électronique en le déplaçant, sous pression de manière à le faire pénétrer dans le materiau injecté et à l'intérieur d'une cavité débouchant sur une seconde paroi principale du moule et communiquant avec ladite empreinte, entre une première position où le module est rétracté et ne dépasse pas ladite seconde paroi du moule, jusqu'à une seconde position à l'intérieur de l'empreinte, où ledit module est en position adéquate dans laquelle la plage de contacts affleure au niveau de la seconde paroi principale du moule avant que ledit matériau thermoplastique ne soit complètement solidifié.

De préférence, les moyens de mise en place du module électronique comportent un vérin déplaçable en translation dans la cavité, depuis une première position où le module est en retrait à l'intérieur de la cavité, et une seconde position où le module est disposé dans l'empreinte du moule, de manière que la face supérieure du module affleure au niveau de la face principale correspondante du corps de carte.

L'invention sera bien comprise à la lumière de la description qui suit, à titre d'exemple illustratif, se rapportant aux dessins annexés dans lesquels:
- la figure 1A et 1B montrent une vue de face schématique d'une carte à mémoire électronique, respectivement aux normes ISO et AFNOR;
- la figure 2 montre une coupe transversale de la carte de la figure 1;
- la figure 3 montre une coupe transversale schématique du dispositif de moulage pour la réalisation d'une carte;
- les figures 4A, 4B et 4C représentent, à une échelle réduite, le dispositif de la figure 3, pour trois positions respectives du moule et du module, correspondant à trois étapes successives du procédé; et
- la figure 5 montre la carte à mémoire, après démoulage à la sortie du dispositif de la figure 3.

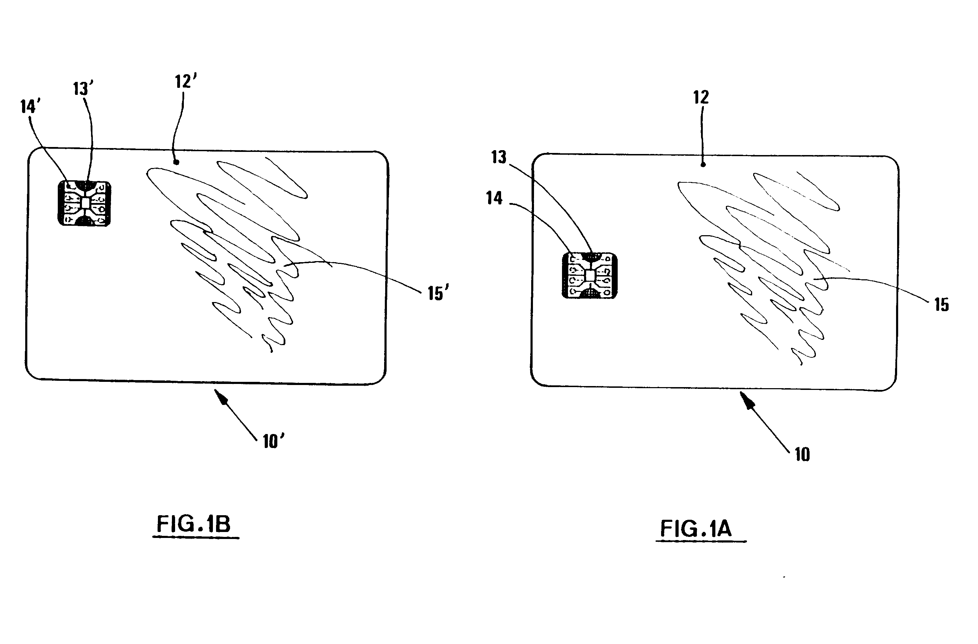

La description dans un premier temps se réfère à la figure 1A, étant entendu que les éléments de la figure 1A identiques et similaires à ceux de la figure 1B portent les mêmes références avec un indice supérieur prime ('). La figure 1A diffère de la figure 1B par la position du module électronique, conformément respectivement aux normes ISO et AFNOR.

La figure 1 montre une vue en plan d'une carte 10 à mémoire électronique, de type connu et comprenant un corps de carte 12 présentant la forme générale d'un parallélépipéde rectangle. La carte 10 est réalisée conformément à la norme ISO 7810 et présente ainsi une longueur L égale à 85 mm, une largeur 1 égale à 54 mm et une épaisseur de 0,8 mm. Le corps de carte comporte une fenêtre 13 au travers de laquelle apparait une plage de contacts électriques 14, au nombre de huit par exemple. Ces derniers sont destinés à entrer en contact avec un appareil associé à la carte et permettant de prélever de la carte des informations en relation avec le service offert à l'utilisateur et possesseur de la carte à mémoire 10. Les contacts électriques 14 obéissent également à la norme ISO rappelée ci-dessus.

La carte 10 comporte ainsi deux faces principales dont la face principale avant est représentée sur la figure 1. La carte comporte un graphisme portant la référence générale 15 et dont un exemple est montré à titre illustratif sur la figure. D'autres formes de réalisation de texte et dessin peuvent conformer un graphisme au sens où il est entendu dans la présente description. Le graphisme est disposé, dans l'exemple monté, sur la face arrière, et le matériau constituant la carte est transparent.

Est également prévu à l'intérieur du corps de carte un module électronique et destiné à permettre le flux d'information entre la carte et l'appareil associé à cette dernière. Le module électronique comporte une plage de contacts 14 et un circuit intégré dont les bornes sont reliés à la plage de contact 14.

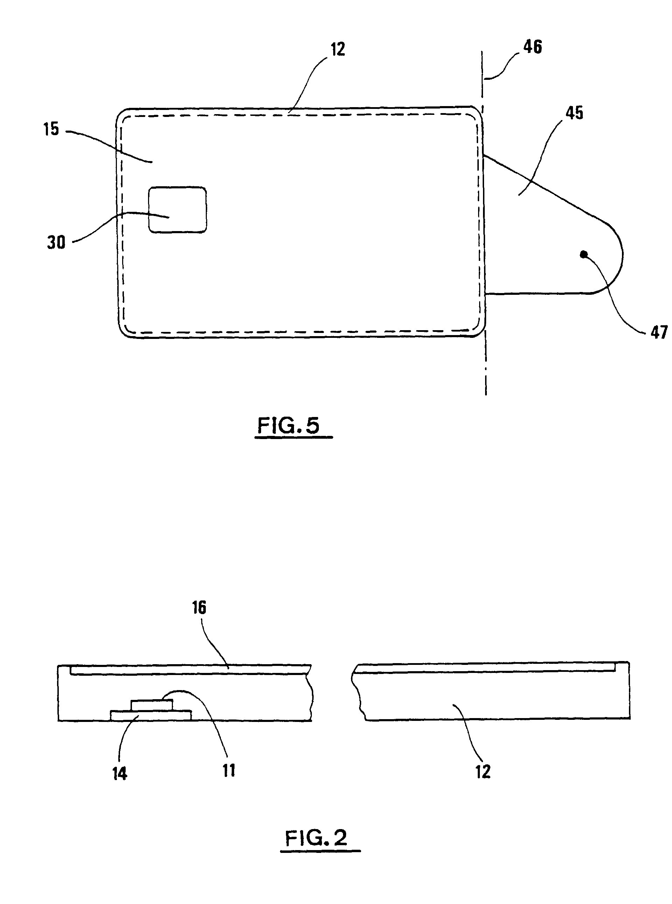

La figure 2 montre une vue en coupe transversale, à échelle très agrandie de la carte de la figure 1, et montrant le corps de carte 12 incluant le module électronique comprenant la plage de contacts 14 et le circuit intégré enfermé dans une pastille 11, et une étiquette 16 servant de support au graphisme 15. L'étiquette 16 est connue en elle-même et peut être constituée de tout élément-support en matériau cellulosique par exemple. La méthode de réalisation de telles étiquettes est connue en elle-même et par exemple, peut être effectuée à partir d'une bande support en un matériau opaque, susceptible d'être soumise à impression par offset, héliogravure ou sérigraphie, puis l'étiquette est découpée aux dimensions exactes de la face principale correspondant au corps de carte. A noter que, dans l'exemple de réalisation montré sur la figure 5, les dimensions de l'étiquette sont inférieures aux dimensions correspondantes du corps de carte 12.

Le corps de carte 12 est réalisé en un matériau thermoplastique, présentant des caractéristiques techniques, notamment de flexion et résistance, conformes à la norme ISO déjà mentionnée.

On pourra se référer pour plus amples détails en ce qui concerne la carte, connue en elle-même au brevet français n° 2 650 530, au nom de la demanderesse. De même, le brevet français n° 88/15553 et la demande de brevet européen n° 128 822 décrivent le module électronique et son procédé de fabrication.

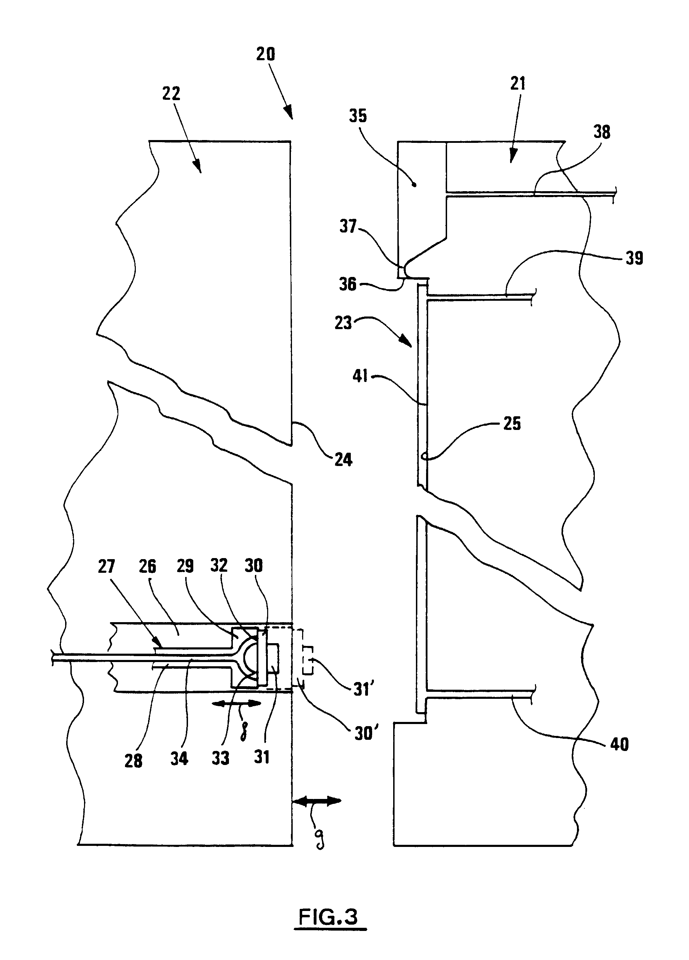

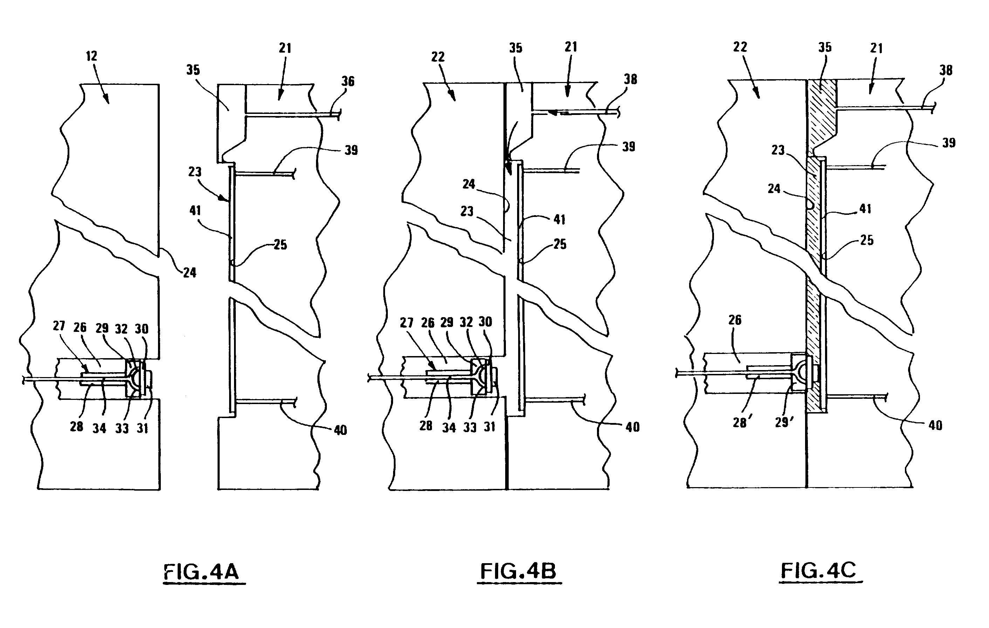

En référence aux figures 3 et 4, il est décrit ci-après le procédé selon l'invention et le dispositif pour sa mise en oeuvre.

Le procédé vise à réaliser par moulage injection une carte à mémoire électronique telle que décrite ci-dessus, à l'aide d'un dispositif de moulage décrit ci-après en référence à la figure 3.

Le dispositif de moulage, ci-après dénommé plus généralement moule, et portant la référence générale 20, comporte une partie fixe 21 et une partie mobile 22. Cette dernière est susceptible de prendre une position proche et plaquée contre la partie fixe 21. En cette position fermée du moule, les parties fixes et mobiles respectivement, définissent une empreinte 23 de forme générale parallélépipédique et correspondant à la forme exacte de la carte à mémoire que l'on veut réaliser.

La paroi principale 24 de la partie mobile 22, et la paroi principale 25 de la partie fixe 21 correspondent, respectivement chacune, aux faces principales avant et arrière de la carte.

Une fois le moule fermé, c'est-à-dire la partie mobile 22 plaquée contre la partie fixe 21, la distance entre les parois principales 24 et 25 correspond à l'épaisseur de la carte (0,8 mm pour la norme ISO). Egalement, l'empreinte 23 présente une longueur et une largeur correspondant à la norme ISO; au retrait près du thermoplastique, les dimensions de l'empreinte sont légèrement plus grandes.

Sur la partie mobile 22 du moule 20 est prévue une cavité 26 débouchant sur la paroi principale 24 et communiquant ainsi, en position fermée du moule, avec l'empreinte 23. La cavité est de forme générale cylindrique à base sensiblement carrée, et à l'intérieur de laquelle est susceptible de se déplacer en translation, selon l'axe longitudinal de la cavité cylindrique 26, un équipage mobile portant la référence générale 27. L'équipage mobile 27 comporte un piston 28 relié à des moyens (tels qu'un vérin hydraulique) connus en eux-mêmes et non représentés, et un plateau 29 qui est fixé à l'extrémité du piston 28, du côté de l'orifice de la cavité 26 débouchant sur la paroi principale 24. Sur le plateau 29 est susceptible d'être disposé et maintenu le module électronique comportant d'une part, une plage de contact 30, et une partie incluant un circuit intégré et relié aux plages de contact 30. La partie incluant le circuit intégré est appelée couramment pastille et porte la référence 31. Le module électronique constitué des plages de contact 30 et de la pastille 31, est maintenu plaqué contre le plateau mobile 29, par phénomène de succion, mis en oeuvre par l'intermédiaire de conduits 32 et 33 débouchant sur la face supérieure du plateau 29 et relié, à leurs extrémités opposées au module électronique, à un conduit principal d'aspiration portant la référence 34 et lui-même relié à des moyens de dépression (non représentés connus en eux-mêmes). Les dimensions respectives du plateau mobile 29 et des plages de contact 30 sont sensiblement égales, de manière que les plages de contact 30 recouvrent quasiment totalement la face frontale (parallèle à la paroi principale 24) du plateau 29. Egalement, de préférence, le plateau 29 présente une dimension, transversalement à la direction longitudinale de la cavité 26, sensiblement équivalente, et plus particulièrement très légèrement inférieure aux dimensions internes de la cavité 26. Le module électronique est connu en lui-même et pourra être du type de celui décrit par exemple dans la demande de brevet européen n° 128 822, à titre illustratif. Succinctement, les plages de contact 30 sont obtenues par l'estampage d'une bande métallique de faible épaisseur mise en forme sur trois niveaux par pliage. Cette bande ainsi formée est introduite dans un moule d'injection des thermoplastiques dont l'empreinte définit la forme extérieure du module, ledit moule comporte des moyens de protection pour éviter le dépôt du matériau de moulage sur les plages de contact et la zone de fixation de la pastille de circuit intégré.

L'homme de l'art pourra se référer à la demande de brevet européen mentionnée précédemment pour plus amples détails.

Le procédé de réalisation du corps de carte par moulage injection est décrit ci-après, en référence aux figures 3 et 4A, 4B et 4C.

Comme montré sur la figure 3, la partie fixe 21 du moule 20 comporte une chambre d'injection 35 disposée latéralement par rapport à l'empreinte 23 et communiquant avec cette dernière par l'intermédiaire d'une ouverture 36 de forme générale quadrangulaire et débouchant sur une face de l'empreinte 23 transversale à la paroi principale 25 de ladite empreinte. La chambre d'injection 35 comporte une partie rétrécie en épaisseur proche de l'ouverture 36 et portant la référence 37. La chambre d'injection 35 est reliée à une source de matériau thermoplastique soumis à chaleur et pression, lesdits moyens étant non représentés, connus en eux-mêmes, par l'intermédiaire d'un canal d'injection 38.

La partie fixe 21 du moule 20 comporte également des conduits d'aspiration 39 et 40 débouchant dans l'empreinte 23, sur la paroi principale 25. Les conduits d'aspiration 39 et 40 sont reliés à des systèmes à dépression, non représentés et connus en eux-mêmes.

En référence aux figures 4A, 4B et 4C, représentant chacune une position de la partie mobile 22 du moule et du piston 27 portant le module électronique 30/31, le procédé de réalisation sera décrit ci-après.

La première étape est représentée sur la figure 4A où l'on voit que la partie mobile 22 est en position écartée par rapport à la partie fixe 21, tandis que le piston 28 portant le module électronique est en position également rétractée à l'intérieur de la cavité 26. Ainsi, le module électronique est disposé à l'intérieur de la cavité et en toute hypothèse, ne dépasse pas de la paroi principale 24 de la partie mobile 22. Dans un premier temps, on dispose à plat contre la paroi principale 25 de la partie fixe 21, un élément support d'un graphisme et portant la référence 41. L'élément support (appelé ci-après graphisme) est maintenu en place contre la paroi principale 25 par un phénomène de succion, en reliant les conduits d'aspiration 39 et 40 au système à dépression.

Dans un second temps, tel que représenté à la figure 4B, la partie mobile 22 du moule est déplacée en translation de manière à ce que la paroi principale 24 vienne en butée contre la partie fixe 21 du moule. Ainsi, l'empreinte 23 définit un volume fermé et délimité par les parois principales, respectivement 24 et 25. A noter que dans cette position, le piston 28 portant le module électronique 30/31 est toujours en position rétractée à l'intérieur de la cavité 26 prévue dans la partie mobile 22.

Toujours dans la position représentée à la figure 4B, on injecte par l'intermédiaire du canal d'injection 38, un matériau thermoplastique sous pression et à l'état liquide qui remplit la chambre d'injection 35 puis, par le rétrécissement 37, et l'ouverture 36 s'écoule dans le volume délimité par l'empreinte 23, et non occupé par le graphisme 41. A noter que compte tenu de la forte pression (environ 150 bars) à laquelle est soumise le matériau, et compte tenu du faible volume de l'empreinte, cette dernière est remplie de matière thermoplastique destinée à constituer le corps de carte en un temps relativement court, inférieur à la seconde par exemple.

Une fois que le processus de remplissage de l'empreinte est déclenché, et de préférence immédiatement après ce déclenchement, on déplace le vérin 28, jusqu'à ce que celui-ci occupe une position 28' pour laquelle le module électronique 30/31 pénètre à l'intérieur de l'empreinte 23, et plus précisément de façon que la face des plages de contacts 30, opposées à la pastille 31, affleurent au niveau de la paroi principale 24. En d'autres termes, la face correspondante des plages de contact 30 est disposée de manière à affleurer au niveau de la face principale du corps de carte en cours de réalisation (figure 4C).

A titre d'exemple, la mise en place du module électronique 30/31 est réalisée dans un temps très court suivant le déclenchement de la phase d'injection de matériau thermoplastique dans l'empreinte, et typiquement de l'ordre de quelques dizièmes de secondes. A noter que ce laps de temps est fonction d'un certain nombre de paramètres dont les plus importants sont la nature du matériau thermoplastique et notamment sa viscosité, et la géométrie et le volume du moule.

Compte tenu du délai bref s'écoulant entre le moment où le matériau a rempli totalement ou quasi-totalement l'empreinte 23, et le moment où le module électronique 30/31 est déplacé à l'intérieur de l'empreinte 23, ce dernier repousse et pénètre à l'intérieur du matériau thermoplastique à l'état visqueux. Ce délai est calculé de manière, toute chose étant égale par ailleurs, qu'il permette la pénétration du module électronique à l'intérieur de l'empreinte remplie de matériau thermoplastique, avant que ce dernier ne soit solidifié.

Ainsi, on note que la mise en place du module électronique résoud les problèmes de l'art antérieur, puisque ledit module est mis en place au moment de la réalisation par moulage du corps de carte, ce qui permet d'une part, de simplifier le mode de réalisation de la carte, et d'autre part, de s'assurer d'une position adéquate dudit module par rapport au corps de carte.

Egalement, la course et la pression du vérin portant le module électronique est contrôlée et définie de manière à faire pénétrer ce dernier dans la matière au moment adéquat et de façon à permettre sa mise en place dans le corps de carte sans géner la formation de ce dernier.

A noter également que la cavité 26 est disposée dans la partie mobile 22 du moule, du côté opposé à la chambre d'injection 35, vue dans le plan du corps de carte. Ceci procure un avantage supplémentaire, à savoir que l'on peut ainsi maîtriser avec plus de précision le délai nécessaire séparant le déclenchement de l'injection et la mise en place du module électronique par déplacement de ce dernier dans la cavité 26. En effet, plus la distance séparant le module et l'orifice 36 d'injection du matériau, est grande, plus on dispose de temps pour mettre en place le module, avant que le matériau ne soit complètement solidifié.

Une fois l'opération de moulage terminée, on coupe la liaison entre le conduit 34 principal d'aspiration (dans le piston 28) et le système à dépression, puis la partie mobile 22 du moule est déplacée en s'éloignant de la partie fixe 21. Ensuite, la carte est démoulée et se présente telle que représentée schématiquement sur la figure 5 où l'on voit que le corps de carte 12, associé à l'élément support du graphisme 15 et aux plages de contacts 30, est solidaire d'une masse de matériau thermoplastique solidifiée portant la référence 45 et correspondant au volume de matériau emplissant la chambre d'injection 35. La droite 46 symbolise l'ouverture 36 de la chambre d'injection dans le volume de l'empreinte 23. Le point 47 correspond à l'endroit où le canal d'injection 38 débouche dans la chambre d'injection 35. Partant de l'ensemble montré sur la figure 5, la dernière étape consiste à séparer la masse 45, appelée nappe d'injection, du corps de carte lui-même.

Un second aspect de l'invention procure des avantages supplémentaires, par l'utilisation de matériau thermoplastique spécifique, pour le corps de carte et pour le module électronique, comme décrit ci-après.

La demanderesse a découvert que l'utilisation de certains matériaux spécifiques permet de réaliser une liaison, entre le corps de carte et le module électronique, sous la forme d'une liaison qui pourrait être comparée à une soudure. Plus particulièrement, le procédé de l'invention tel que décrit ci-dessus, avec ces matériaux spécifiques, permet la création de liaisons chimiques intermoléculaires, mettant en jeu des sites actifs de la matière liquide, et de la face solide, pour les matériaux constituant respectivement le corps de carte et le module électronique.

Ceci est extrêmement avantageux puisque l'on renforce ainsi la solidarisation entre le corps de carte et le module, et donc la fiabilité et la résistance mécanique de la carte à mémoire ainsi réalisée.

La demanderesse a effectué des tests et essais avec les matériaux mentionnés dans le tableau n° 1 ci-après.

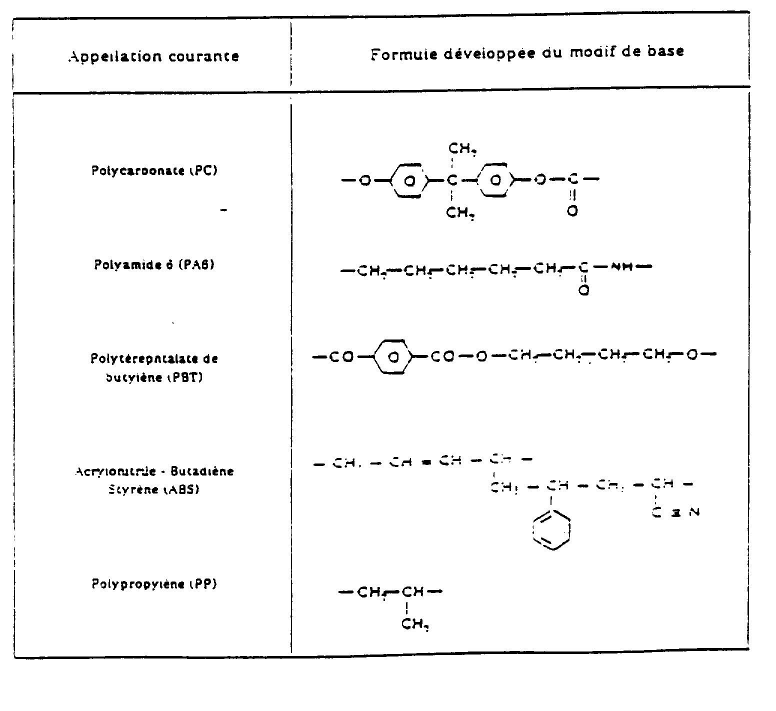

Le tableau N° 2 ci-dessous résume les différents tests effectués par la demanderesse pour différences combinaisons ce matériaux constituant respectivement le corps de carte et le module électronique, les matériaux étant identifiés car leurs initiales telles que mentionnées sur le tableau n° 1.

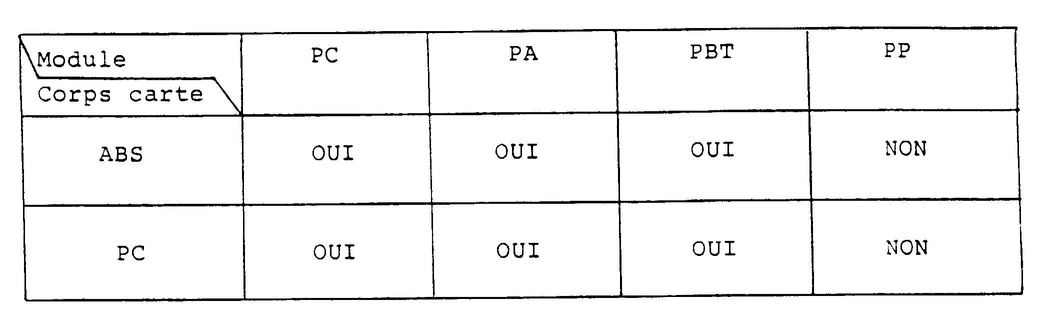

L'exemple du polycarbonate (PC) est explicité en détail ci-après. Ce matériau est un polymère amorphe comportant des noyaux benzéniques et des groupements C=O qui sont fortement réactifs et permettent donc la création de liaisons intermoléculaires, qui sont favorisées par l'état amorphe du matériau.

Trois cas de liaisons sont possibles:
- entre deux noyaux benzéniques 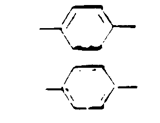
- entre deux groupements C=O: 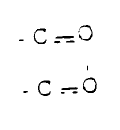
- entre un noyau benzénique et un groupement C=O:

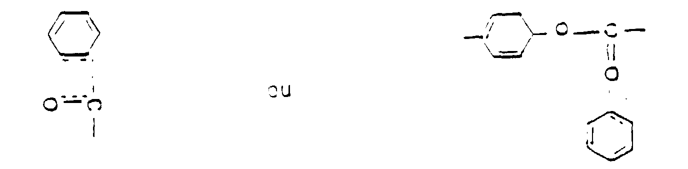

On constate que ce matériau présente une multiplicité de liaisons chimiques potentielles entre deux molécules de ce matériau. Ainsi, le corps de carte et le module étant réalisés en PC, permet la création d'une très bonne liaison entre ces derniers, une fois le module mis en place par rapport au matériau constituant le corps de carte, conformement à la description du procédé qui précède.

Les autres matériaux qui ont été testés et mentionnés sur les tableaux ci-dessus, confirment que tout matériau présentant des noyaux benzéniques et/ou des groupements C=O permettent la réalisation de liaisons chimiques intermoléculaires et donc d'assurer une excellente solidarisation du module sur le corps de carte. Les tests confirment également que le matériau tel que le polypropylène (PP) ne permet pas la réalisation de telles liaisons intermoléculaires.

L'invention n'est pas limitée au mode de réalisation décrit mais englobe toute variante telle que mentionnée dans les revendications ci-après.

## Revendications

1. Procédé pour la fabrication d'une carte à mémoire électronique comprenant :
a) un corps de carte (12) réalisé en un matériau thermoplastique et présentant deux faces principales, sensiblement parallèles entre elles ;
b) un élément-support comprenant un graphisme sur une de ses faces au moins ;
c) un module électronique comprenant une plage de contacts sur une des faces de laquelle est fixée une pastille incluant un circuit intégré, comportant les étapes suivantes :
- dans un moule, pourvu d'une empreinte définissant la forme de la carte et limité par deux parois principales correspondant aux faces principales de ladite carte, on dispose et on maintient ledit élément-support contre une première paroi principale du moule ;
- on injecte dans le volume défini par ladite empreinte, un matériau thermoplastique appelé à remplir ledit volume, non occupé par ledit élément-support;
et, caractérisé en ce qu'il comporte en outre une étape selon laquelle :
- de manière à faire pénétrer le module électronique dans le matériau avant que ledit matériau injecté ne soit complètement solidifié, on met en place ledit module électronique en le déplaçant, à l'intérieur d'une cavité débouchant sur une seconde paroi du moule de manière à communiquer avec ladite empreinte, entre une première position où ledit module est rétracté et ne dépasse pas de ladite seconde paroi du moule, jusqu'à une seconde position, à l'intérieur de l'empreinte, où ledit module est en position adéquate dans laquelle la plage de contacts affleure au niveau de la seconde paroi principale du moule.

2. Procédé selon la revendication 1, caractérisé en ce que l'on met en place ledit module électronique, sous pression.

3. Procédé selon l'une des revendications précédentes, caractérisé en ce que les matériaux constituant respectivement ledit corps de carte et ledit module électronique sont tels qu'à l'état liquide ou visqueux, sous l'effet de la température et de la pression, lors de la mise en place du module électronique, il se crée des liaisons chimiques intermoléculaires entre le matériau du corps de carte et le matériau du module électronique.

4. Procédé selon la revendication 3, caractérisé en ce que le corps de carte est en ABS Acrylonitrile-Butadiène-Styrène, et le matériau constituant le module électronique est en polyamide (PA) ou en polytéréphtalate de butylène (PBT).

5. Procédé selon la revendication 3, caractérisé en ce que le corps de carte est en polycarbonate (PC), et en ce que ledit module électronique est constitué du même matériau, ou de polyamide, ou de polytéréphtalate de butylène (PBT).

6. Procédé selon la revendication 3, caractérisé en ce que les matériaux constituant respectivement ledit corps de carte et ledit module électronique comportent des noyaux benzéniques, et/ou des groupements -C=0.

7. Procédé selon l'une des revendications précédentes, caractérisé en ce que l'on met en place ledit module électronique à l'intérieur de l'empreinte, après un laps de temps suivant l'injection du matériau dans l'empreinte, inférieur à une seconde, et de préférence compris entre 1/10e et 5/10e de seconde.

8. Dispositif pour la fabrication d'une carte à mémoire électronique comprenant un corps de carte réalisé en un matériau thermoplastique et présentant, deux faces principales sensiblement parallèles entre elles ; un élément-support comprenant un graphisme sur une de ses faces au moins ; un module électronique comprenant une plage de support sur une des faces de laquelle est fixée une pastille comportant un circuit intégré, ledit dispositif comportant :
- un moule pourvu d'une empreinte définissant la forme de la carte et limité par deux parois principales correspondant'aux faces principales de la carte ;
- des moyens pour disposer et maintenir ledit élément-support contre une première paroi principale du moule ;
- des moyens pour injecter dans le volume défini par l'empreinte un matériau thermoplastique, à l'état liquide ou visqueux, et appelé à remplir ledit volume non occupé par ledit élément support ;
et, caractérisé en ce qu'il comporte en outre :
- des moyens pour mettre en place et maintenir ledit module électronique en le déplaçant, sous pression de manière à le faire pénétrer dans le matériau injecté et à l'intérieur d'une cavité débouchant sur une seconde paroi principale du moule et communiquant avec ladite empreinte, entre une première position où le module est rétracté et ne dépasse pas de ladite seconde paroi du moule, jusqu'à une seconde position à l'intérieur de l'empreinte, où ledit module est en position adéquate dans laquelle la plage de contacts affleure au niveau de la seconde paroi principale du moule, avant que ledit matériau thermoplastique ne soit complètement solidifié.

9. Dispositif selon la revendication 8, caractérisé en ce que les moyens de mise en place et de maintien dudit module électronique comprennent un piston associé à des moyens de déplacement sous pression, sur lequel est maintenu de manière temporaire, le module électronique.

10. Dispositif selon la revendication 9, caractérisé en ce que ladite cavité est disposée du côté opposé au moyen d'injection de matériau dans ladite empreinte.

## Patentansprüche

1. Verfahren zur Herstellung einer Speicherkarte umfassend
a) einen Kartenkörper (12), der aus einem thermoplastischen Material hergestellt ist und zwei zueinander im wesentlichen parallele Hauptflächen aufweist,
b) einen Element-Träger umfassend eine Beschriftung auf wenigstens einer seiner Flächen,
c) einen elektronischen Modul umfassend einen Kontaktbereich, wobei auf einer der Flächen hiervon ein Chip, der einen integrierten Schaltkreis einschließt, befestigt ist, das die folgenden Schritte aufweist:
- Man ordnet den Element-Träger in einer Form an, die mit einer Vertiefung versehen ist, die die Form der Karte definiert, und durch zwei Hauptwandungen entsprechend den Hauptflächen der Karte begrenzt ist, und hält den Element-Träger gegen eine erste Hauptwandung der Form,
- man injiziert in das durch die Vertiefung definierte Volumen ein thermoplastisches Material, um das durch den Element-Träger nicht eingenommene Volumen zu füllen,
und dadurch gekennzeichnet ist, daß es zudem einen Schritt umfaßt, gemäß dem
man zum Eindringenlassen des elektronischen Moduls in das Material, bevor das injizierte Material nicht vollständig verfestigt ist, den elektronischen Modul anbringt, indem er im Innem einer Ausnehmung, die in einer zweiten Wandung der Form mit der Vertiefung in Verbindung stehend mündet, zwischen einer ersten Position, in der der Modul zurückgezogen ist und gegenüber der zweiten Wandung der Form nicht vorsteht, bis zu einer zweiten Position im Innern der Vertiefung verschoben wird, in der der Modul sich in adäquater Position befindet, in der der Kontaktbereich auf das Niveau der zweiten Hauptwandung der Form gebracht ist.

2. Verfahren nach Anspruch 1, dadurch gekennzeichnet, daß man den elektronischen Modul unter Druck anbringt.

3. Verfahren nach einem der vorhergehenden Ansprüche, dadurch gekennzeichnet, daß die Materialien, die den Kartenkörper bzw. den elektronischen Modul bilden, solche sind, die im flüssigen oder viskosen Zustand unter der Einwirkung von Temperatur und Druck während des Anbringens des elektronischen Moduls zwischen den Materialien des Kartenkörpers und dem Material des elektronischen Moduls intermolekulare chemische Verbindungen bilden.

4. Verfahren nach Anspruch 3, dadurch gekennzeichnet, daß der Kartenkörper aus ABS Acrylnitrilbutadienstyrol ist, und das Material, das den elektronischen Modul bildet, aus Polyamid (PA) oder Polybutylenterephtalat (PBT) ist.

5. Verfahren nach Anspruch 3, dadurch gekennzeichnet, daß der Kartenkörper aus Polycarbonate (PC) ist, und daß der elektronische Modul aus dem gleichen Material oder aus Polyamid oder Polybutylenterephtalat (PBT) gebildet ist.

6. Verfahren nach Anspruch 3, dadurch gekennzeichnet, daß die Materialien die den Kartenkörper und den elektronischen Modul bilden, Benzolkeme und/oder Gruppen der Form -C=O enthalten.

7. Verfahren nach einem der vorhergehenden Ansprüche, dadurch gekennzeichnet, daß man den elektronischen Modul im Innern der Vertiefung nach einem Zeitablauf nach der Injektion des Materials in die Vertiefung von weniger als einer Sekunde und vorzugsweise zwischen 1/10 und 5/10 s anbringt.

8. Vorrichtung zur Herstellung einer Speicherkarte umfassend einen Kartenkörper, der aus thermoplastischem Material hergestellt ist und zwei zueinander im wesentlichen parallele Hauptflächen aufweist, einen Element-Träger umfassend eine Schrift auf wenigstens einer seiner Flächen, und einen elektronischen Modul umfassend einen Kontaktbereich, wobei auf einer der Flächen hiervon ein Chip, der einen integrierten Schaltkreis einschließt, befestigt ist, wobei die Vorrichtung
- eine Form, die mit einer Vertiefung versehen ist, die die Form der Karte definiert und durch zwei Hauptwandungen entsprechend den Hauptflächen der Karte begrenzt ist,
- Mittel zum Anordnen und Halten des Element-Trägers gegen eine erste Hauptwandung der Form,
- Mittel zum Injizieren eines thermoplastischem Materials in flüssigem oder viskosem Zustand in das durch die Vertiefung definierte Volumen, das das nicht durch den Element-Träger eingenommene Volumen ausfüllen soll, umfaßt
und dadurch gekennzeichnet ist, daß sie zudem
- Mittel zum Anbringen und Halten des elektronischen Moduls umfaßt, indem dieser unter Druck derart, daß er in das injizierte Material eindringt und im Innern einer Ausnehmung, die in einer zweiten Wandung der Form mit der Vertiefung in Verbindung stehend mündet, zwischen einer ersten Position, in der der Modul zurückgezogen ist und gegenüber der zweiten Wandung der Form nicht vorsteht, bis zu einer zweiten Position im Innern der Vertiefung verschoben wird, in der der Modul sich in adäquater Position befindet, in der der Kontaktbereich auf das Niveau der zweiten Hauptwandung der Form gebracht ist, bevor das thermoplastische Material vollständig verfestigt ist.

9. Vorrichtung nach Anspruch 8, dadurch gekennzeichnet, daß die Mittel zum Anbringen und Halten des elektronischen Moduls einen Kolben umfassen, der Mitteln zum Verschieben unter Druck zugeordnet ist und an dem der elektronische Modul zeitweilig gehalten wird.

10. Vorrichtung nach Anspruch 9, dadurch gekennzeichnet, daß die Ausnehmung an der Seite gegenüberliegend zu dem Mittel zum Injizieren von Material in die Vertiefung angeordnet ist.

## Claims

1. Method of manufacturing a smart card comprising:
a) a thermoplastics material card body (12) having two substantially parallel major sides;
b) a support member with a graphic on at least one side; and
c) an electronic module comprising a contact array to one side of which is fixed a chip including an integrated circuit, the method including the following steps:
· said support member is placed in a mould comprising an imprint defining the shape of said card and delimited by two main walls corresponding to said major sides of said card and held against a first main wall thereof; and
· a thermoplastics material is injected into the volume defined by said imprint to fill said volume not occupied by said support member;
is characterized in that it further includes a step in which:
· in order to cause the electronic module to penetrate into the material before said injected material has solidified completely said electronic module is displaced in a cavity which opens into the second wall of the mould in such a way as to communicate with said imprint between a first position in which it is retracted and does not project beyond said second wall of the mould and a second position inside the imprint in which said electronic module is in an appropriate position in which the contact array is flush with the second main wall of the mould.

2. Method according to claim 1 characterized in that said electronic module is inserted under pressure.

3. Method according to any one of the preceding claims characterized in that the respective materials of said card body and said electronic module are such that in the liquid or viscous state due to temperature and pressure when the electronic module is inserted intermolecular chemical bonds are formed between the material of the card body and the material of the electronic module.

4. Method according to claim 3 characterized in that the card body material is acrilonitrile-butadiene-styrene (ABS) and the electronic module material is polyamide (PA) or polybutyleneteraphtalate (PBT).

5. Method according to claim 3 characterized in that the card body material is polycarbonate (PC) and the electronic module material is the same material or polyamide or polybutyleneteraphtalate (PBT).

6. Method according to claim 3 characterized in that the respective materials of said card body and said electronic module comprise benzene rings and/or -C=CO groups.

7. Method according to any one of the preceding claims characterized in that said electronic module is inserted in said imprint after a time lapse from injection of the material into the imprint less than one second and preferably between 0.1 and 0.5 s.

8. Device for manufacturing a smart card comprising a thermoplastics material card body having two substantially parallel major sides; a support member with a graphic on at least one side; and an electronic module comprising a contact array to one side of which is fixed a chip including an integrated circuit. said device including:
· a mould having an imprint defining the shape of the card and delimited by two main walls corresponding to the major sides of the card;
· means for disposing and holding said support member against a first main wall of the mould; and
· means for injecting a liquid or viscous thermoplastics material into the volume defined by said imprint to fill said volume not occupied by said support member;
and being characterized in that it further includes:
· means for inserting and holding said electronic module by displacing it under pressure so as to cause it to penetrate into the injected material and into a cavity which opens into the second main wall of the mould and which communicates with said imprint between a first position in which it is retracted and does not project beyond said second wall of the mould and a second position inside the imprint in which said electronic module is in an appropriate position in which the contact array is flush with the second main wall of the mould before said thermoplastic material has solidified completely.

9. Device according to claim 8 characterized in that the electronic module inserting and holding means comprise a piston on which the electronic module is temporarily held associated with pressurized displacement means.

10. Device according to claim 9 characterized in that said cavity is on the opposite side to said means for injecting material into said imprint.
